# EUROPEAN PATENT APPLICATION

(11) **EP 3 315 623 A1**
(43) Date of publication of application: **02.05.2018**
(21) Application number: 17189450.4
(22) Date of filing: 05.09.2017
(51) Int. Cl.: C22C 19/05, C22C 27/02, C22C 27/06, H01M 4/36, H01M 4/24, H01M 4/38, H01M 10/24, H01M 10/34, H01M 12/08, B22F 1/00, B22F 1/02

(54) **ANODE MATERIAL AND BATTERY**

(30) Priority: 27.10.2016 JP 2016210702
(71) Applicant: Toyota Jidosha Kabushiki Kaisha, Toyota-shi, Aichi-ken, 471-8571 (JP)
(72) Inventor: KON, Makio, Aichi-ken, Aichi 471-8571 (JP)
(74) Representative: J A Kemp

(57) **Abstract**

An object of the present disclosure is to provide an anode material with a high capacity maintenance rate. To achieve the above object, the present disclosure provides an anode material to be used for a battery that contains an aqueous liquid electrolyte, the anode material comprising: a hydrogen storing alloy that reversibly stores and releases hydrogen; characterized in that the hydrogen storing alloy contains Ti, Cr, and V as main components, and is an alloy that contains a BCC phase as a main phase; a lattice constant of the BCC phase is 3.01 Å or more and 3.10 Å or less; and the Cr content in the hydrogen storing alloy is 20 at% or more

## Description

### Technical Field

The present disclosure relates to an anode material and a battery.

### Background Art

Hydrogen storing alloys are utilized as anode materials for batteries that contain aqueous liquid electrolytes. Patent Literature 1 discloses an alkali battery electrode comprising a hydrogen storing alloy that reversibly stores and releases hydrogen, and a coating layer that coats the surface of the hydrogen storing alloy, characterized in that the coating layer is a layer formed mainly from TiNi₃ alloy layer. In addition, Patent Literature 1 discloses a TiCrV alloy, which is formed mainly from V elements, as a hydrogen storing alloy.

Also, Patent Literature 2 discloses a method for producing a hydrogen storing alloy electrode, the method comprising steps of: preparing a hydrogen storing alloy member having a first phase mainly responsible for storing hydrogen and a second phase mainly responsible for electrochemical activation; conducting an storing and releasing treatment of hydrogen gas to the hydrogen storing alloy member; and forming an electrode using the hydrogen storing alloy member underwent the storing and releasing treatment of hydrogen gas.

### Citation List

### Patent Literatures

Patent Literature 1: Japanese Patent Application Laid-Open (JP-A) No. 2016-129102
Patent Literature 2: JP-A 2004-192965

### Summary of Disclosure

### Technical Problem

For example, if the TiCrV alloy disclosed by Patent Literature 1 were used as an anode material, although the battery would have high capacity, the capacity maintenance rate would be low. The present disclosure has been made in view of the actual circumstances, and a main object thereof is to provide an anode material with high capacity maintenance rate.

### Solution to Problem

To achieve the object, the present disclosure provides an anode material to be used for a battery that contains an aqueous liquid electrolyte, the anode material comprising: a hydrogen storing alloy that reversibly stores and releases hydrogen; characterized in that the hydrogen storing alloy contains Ti, Cr, and V as main components, and is an alloy that contains a BCC phase as a main phase; a lattice constant of the BCC phase is 3.01 Å or more and 3.10 Å or less; and the Cr content in the hydrogen storing alloy is 20 at% or more.

According to the present disclosure, increasing the Cr content may inhibit the elution of V, and thus allow an anode material to have high capacity maintenance rate. In addition, according to the present disclosure, the lattice constant of the BCC phase is in the specific range, so as to allow an anode material to have excellent capacity properties.

In the disclosure, the anode material may further comprise a catalyst that coats the hydrogen storing alloy.

In the disclosure, the catalyst may contain a noble metal element.

In the disclosure, neither the hydrogen storing alloy nor the catalyst may contain Ni.

In the disclosure, the Cr content in the hydrogen storing alloy may be 50 at% or less.

Also, the present disclosure provides a battery comprising a cathode, an anode, and an electrolyte layer that contains an aqueous liquid electrolyte and is formed between the cathode and the anode; characterized in that the anode is provided with the anode active material layer that contains the above described anode material.

According to the present disclosure, the anode active material layer contains the above described anode material, so as to allow a battery to have high capacity maintenance rate.

In the disclosure, the cathode may be an air electrode.

### Advantageous Effects of Disclosure

The present disclosure provides an anode material with high capacity maintenance rate.

### Brief Description of Drawings

FIG. 1 is a schematic cross-sectional view exemplifying the anode material of the present disclosure.
FIGS. 2A and 2B are schematic cross-sectional views exemplifying the battery of the present disclosure.
FIG. 3 is a ternary diagram explaining the hydrogen storing alloy in the present disclosure.
FIG. 4 is the result of an XRD measurement for the hydrogen storing alloys produced in Examples 1 to 3 and Comparative Examples 1 and 2.
FIG. 5 is the result of a charge and discharge test for the evaluation cells produced in Examples 1 to 3 and Comparative Example 1.
FIG. 6 is a graph showing the relation between the Cr amount and the specific capacity during discharge in the evaluation cells produced in Examples 1 to 3 and Comparative Examples 1 and 2.
FIG. 7 is the result of a cycle test for the evaluation cells produced in Examples 1 to 3 and Comparative Example 1.
FIG. 8 is a graph showing the relation among the Cr amount, the capacity decrease rate, and the V elution amount in the evaluation cells produced in Examples 1 to 3 and Comparative Example 1.
FIG. 9 is the result of an XRD measurement for the hydrogen storing alloy produced in Examples 4, 5, and Comparative Example 1.
FIG. 10 is the result of a charge and discharge test for the evaluation cells produced in Examples 3 to 5.

### Description of Embodiments

The anode material and the battery of the present disclosure are hereinafter described in details.

### A. Anode material

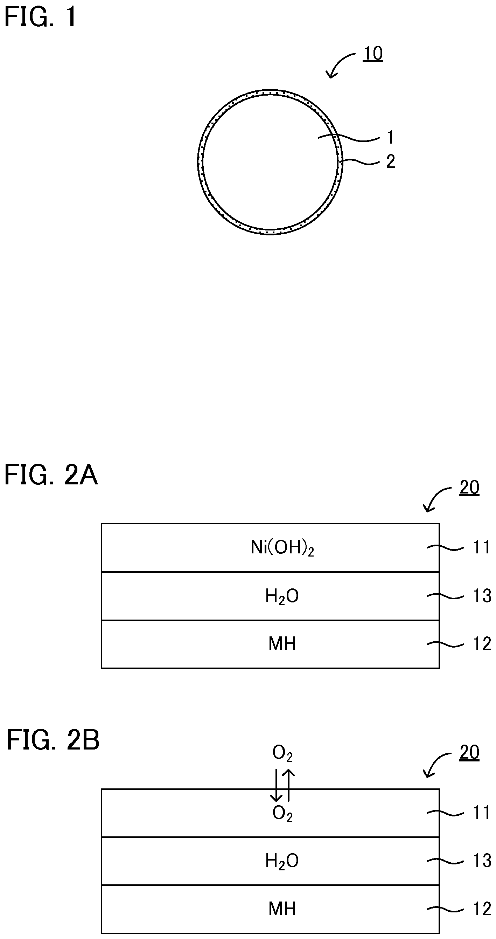

FIG. 1 is a schematic cross-sectional view exemplifying the anode material of the present disclosure. Anode material 10 shown in FIG. 1 comprises hydrogen storing alloy 1 that reversibly stores and releases hydrogen, and catalyst 2 that coats hydrogen storing alloy 1. Also, hydrogen storing alloy 1 contains Ti, Cr, and V as main components, and is an alloy that contains a BCC phase as a main phase. Further, the lattice constant of the BCC phase and the Cr content in hydrogen storing alloy 1 are in the specific range.

According to the present disclosure, increasing the Cr content may inhibit the elution of V, and thus allow an anode material to have high capacity maintenance rate. In addition, according to the present disclosure, the lattice constant of the BCC phase is in the specific range, so as to allow an anode material to have excellent capacity properties.

Here, the TiCrV alloy having a BCC phase has a high capacity potential such as over 700 mAh/g; thus, its advantage is that the capacity potential is drastically higher than that of conventionally known ABs-based alloys. Meanwhile, the TiCrV alloy having a BCC phase is low in the capacity maintenance rate, and has a problem in durability. For example, Examples in Patent Literature 1 disclose Ti₂₀Cr₁₀V₇₀ as the TiCrV alloy. Although Ti₂₀Cr₁₀V₇₀ has high capacity, the capacity maintenance rate is low.

The present inventor has thoroughly researched and found out that the reason for the low capacity maintenance rate was the elution of V. Further, the present inventor has found out that the elution of V may be inhibited by increasing the Cr content, and thus the capacity maintenance rate may be improved. On the other hand, as in the later described Examples, the lattice constant of Ti₂₀Cr₁₀V₇₀ (the lattice constant measured from XRD) was approximately 3.06 Å. In the present disclosure, the lattice constant similar to that of Ti₂₀Cr₁₀V₇₀ is maintained, so that a crystal structure suitable for storing and releasing hydrogen may be obtained, and thereby excellent capacity properties may be obtained. In other words, in the present disclosure, not merely increasing the Cr content, but increasing the Cr content while maintaining the lattice constant in the specific range so as to allow an anode material with excellent capacity properties and high capacity maintenance rate.

The anode material of the present disclosure is hereinafter described in each constitution.

### 1. Hydrogen storing alloy

The anode material of the present disclosure comprises a hydrogen storing alloy that reversibly stores and releases hydrogen. The hydrogen storing alloy is an alloy that contains Ti, Cr, and V as the main components. Also, the hydrogen storing alloy is an alloy that contains a BCC phase as the main phase. Incidentally, the BCC phase refers to a crystal phase having a body-centered cubic structure.

As described above, the hydrogen storing alloy is an alloy that contains Ti, Cr, and V as the main components. "Containing Ti, Cr, and V as the main components" means that the total proportion of Ti, Cr, and V is the most with respect to all the elements included in the hydrogen storing alloy. The total proportion of Ti, Cr, and V with respect to all the elements that included in the hydrogen storing alloy is, for example, 50 at% or more, may be 70 at% or more, may be 90 at% or more, and may be 95 at% ormore. The composition of the hydrogen storing alloy may be determined by, for example, dissolving the hydrogen storing alloy in acid and measuring thereof by ICP Optical Emission Spectrometry (ICP-OES).

Also, the hydrogen storing alloy may contain only Ti, Cr, and V, and may contain additional element to Ti, Cr, and V. In particular, the hydrogen storing alloy may contain Ni, and may not contain Ni.

The Cr content in the hydrogen storing alloy is usually 20 at% or more, and may be 30 at% or more. If the Cr content is 20 at% or more, the elution of V may be drastically decreased. Meanwhile, the Cr content is not limited if the amount allows the formation of the BCC phase; for example, the content is 50 at% or less, and may be 40 at% or less.

The content of V and Ti in the hydrogen storing alloy is not limited if the amount allows the formation of the BCC phase. The V content is, for example, 10 at% or more, may be 15 at% or more, and may be 25 at% or more. Meanwhile, the V content is, for example, 70 at% or less, may be 65 at% or less, and may be 55 at% or less. The Ti content is, for example, 20 at% or more, and may be 25 at% or more. Meanwhile, the Ti content is, for example, 45 at% or less, and may be 40 at% or less.

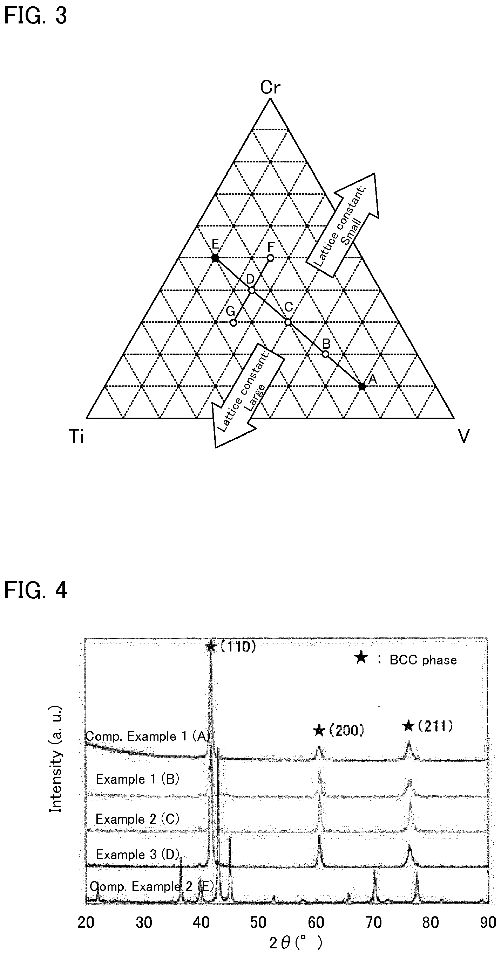

Also, Ti, Cr, and V in the hydrogen storing alloy preferably have a relation of, for example, Ti : Cr : V = 15 + 0.5x : x : 85 - 1.5x in the atomic ratio. Incidentally, this relation corresponds to the straight line that passes A to E in the later described FIG. 3. The x is, for example, more than 10, may be 15 or more, and may be 20 or more. Meanwhile, the x is, for example, less than 50, may be 45 or less, and may be 40 or less.

As described above, the hydrogen storing alloy is an alloy that contains the BCC phase as the main phase. "Containing the BCC phase as the main phase" means that the proportion of the BCC phase is the most with respect to all the crystal phases included in the hydrogen storing alloy. The proportion of the BCC phase with respect to all the crystal phases included in the hydrogen storing alloy is, for example, 50 mol% or more, may be 70 mol% or more, and may be 90 mol% or more. The proportion of the BCC phase may be determined by, for example, a quantitative analysis using an X-ray diffraction (such as a quantitative analysis using R values, and the Rietvelt method). Also, the hydrogen storing alloy may contain only the BCC phase, and may contain additional crystal phase to the BCC phase.

The BCC phase is a crystal phase that contains Ti, Cr, and V. The BCC phase preferably has peaks at the positions of 2**θ =** 41.8° ± 5.0°, 60.7° ± 5.0°, and 76.3° ± 5.0° in an X-ray diffraction measurement using a CuKα ray. Incidentally, the peak positions slightly change depending on the composition of the hydrogen storing alloy; thus, the peak positions may be in a range of ± 3.0°, may be in a range of ± 1.0°, and may be in a range of ± 0.5°.

Also, in the present disclosure, the lattice constant of the BCC phase is in the specific range. The lattice constant of the BCC phase may be typically determined by the value of 2**θ** at the main peak in the XRD measurement (the peak in the vicinity of 2**θ** = 41.8°). The lattice constant of the BCC phase is, usually 3.01 Å or more, may be 3.02 Å or more, and may be 3.03 Å or more. If the lattice constant is too small, the charge potential increases to facilitate the decomposition of the liquid electrolyte (generation of hydrogen), which may possibly result in degrading the capacity properties. Meanwhile, the lattice constant of the BCC phase is, usually 3.10 Å or less, may be 3.09 Å or less, and may be 3.08 Å or less. If the lattice constant is too large, the discharge potential increases and the battery voltage may possibly be degraded.

The shape of the hydrogen storing alloy is not limited, and examples thereof may include a granular shape. The average particle size of the hydrogen storing alloy is not limited to any size; the size may be appropriately selected to be suitable for the characteristics of the battery to be used.

The method for producing the hydrogen storing alloy is not limited, and examples thereof may include an arc melting method. An example of the arc melting method may be a method by preparing raw material metals of the hydrogen storing alloy (such as a simple substance of Ti, a simple substance of Cr, and a simple substance of V), causing an arc discharge using a material such as a graphite electrode, and dissolving the raw material metals using the heat generated upon the arc discharge. Also, a gas removing step of removing the gas adsorbed on the surface of the hydrogen storing alloymaybe conducted as required. Examples of the method for removing the gas may include a method by settling the hydrogen storing alloy in a vacuum. Also, as required, a hydrogenating step of hydrogenating the hydrogen storing alloy by settling the hydrogen storing alloy in a pressurized hydrogen gas atmosphere, and a dehydrogenating step of dehydrogenating the hydrogen storing alloy by settling the hydrogen storing alloy in a depressurized atmosphere, may be conducted. Conducting the hydrogenating step and the dehydrogenating step facilitates crushing the hydrogen storing alloy.

### 2. Catalyst

The anode material of the present disclosure may comprise a catalyst that coats the hydrogen storing alloy. The catalyst is a catalyst that promotes at least one of the storing reaction and the releasing reaction of hydrogen. Also, the catalyst may be a simple substance of metal, and may be an alloy. Examples of the metal element contained in the catalyst may include transition metal elements. Above all, the group 8 elements, the group 9 elements, and the group 10 elements are preferable, and the group 10 elements (Ni, Pd, and Pt) are particularly preferable. The catalyst preferably contains at least one of the group 8 element, the group 9 element, and the group 10 element as the main component. The proportion of the group 10 element in the catalyst is, for example, 50 at% or more, may be 70 at% or more, and may be 90 at% or more. The same applies for the proportion of each the group 8 element and the group 9 element. The catalyst may contain Pd as a main component. The catalyst may contain Ni as a main component.

The catalyst may contain a noble metal element as a main component. The proportion of the noble metal element in the catalyst is, for example, 50 at% or more, may be 70 at% or more, and may be 90 at% or more. Meanwhile, transition metal elements other than the noble metal element are not limited, and examples thereof may include at least one kind of Ni, Co, and Cu. Also, the catalyst may be a catalyst containing Ni, and may be a catalyst not containing Ni.

The catalyst may be directly disposed on the surface of the hydrogen storing alloy, and may be disposed via the other layer. Also, the catalyst may coat the hydrogen storing alloy in a film shape, and may coat in a granular shape. The latter corresponds to the state in which the catalyst in a granular shape is supported on the hydrogen storing alloy. The coverage of the catalyst is, for example, 50% or more, may be 70% or more, and may be 100% or more. The method for forming the catalyst is not limited, and examples thereof may include a sputtering method, a vapor deposition method, and a CVD method.

### 3. Anode material

The anode material of the present disclosure contains at least the above described hydrogen storing alloy, and usually applied for a battery that contains an aqueous liquid electrolyte.

### B. Battery

FIGS. 2A and 2B are schematic cross-sectional views exemplifying the battery of the present disclosure. Battery 20 shown in FIG. 2A comprises cathode 11 that contains Ni(OII)₂ as a cathode active material, anode 12 that contains the above described anode material (MH), and electrolyte layer 13 that contains an aqueous liquid electrolyte and is formed between cathode 11 and anode 12. Battery 20 shown in FIG. 2A corresponds to a so-called nickel-metal hydride battery (Ni-MH battery), in which the following reactions occur:
Cathode: NiOOH + H₂O + e⁻ ↔ Ni(OH)₂ + OH⁻
Anode: MH + OH⁻ ↔ M + H₂O + e⁻.

On the other hand, in battery 20 shown in FIG. 2B, cathode 11 is an air electrode that utilizes oxygen (O₂) as the cathode active material. Oxygen is, for example, supplied from the air during discharge, and released to the air during charge. Battery 20 shown in FIG. 2B corresponds to a so-called air-metal hydride battery (Air-MHbattery), in which the following reactions occur:
Cathode: O₂ + 2H₂O + 4e⁻ ↔ 4OH⁻
Anode: MH + OH⁻ ↔ M + H₂O + e⁻.

According to the present disclosure, the anode active material layer contains the above described anode material, so as to allow a battery to have high capacity maintenance rate.

The battery of the present disclosure is hereinafter described in each constitution.

### 1. Anode

The anode is usually provided with an anode active material layer and an anode current collector. The anode active material layer contains at least the anode material described in "A. Anode material" above as an anode active material. The anode active material layer may further contain at least one of a conductive material and a binder. The conductive material is not limited if the material can give electron conductivity to the anode active material layer, and examples thereof may include metal powders such as powders of Ni, oxides such as cobalt oxide, graphite, and carbon materials such as carbon nanotube. Also, examples of the binder may include cellulose such as carboxy methyl cellulose (CMC), polyol such as polyvinyl alcohol (PVA), and fluororesin such as polyvinylidene fluoride (PVDF).

Examples of the material for the anode current collector may include copper, stainless, aluminum, nickel, iron, titanium, and carbon. Also, examples of the shape of the anode current collector may include a foil shape, a mesh shape, and a porous shape.

### 2. Cathode

The cathode is usually provided with a cathode active material layer and a cathode current collector. Meanwhile, as shown in FIG. 2B, if the cathode is an air electrode, the air electrode usually comprises an air electrode reaction layer and an air electrode current collector.

The cathode active material layer contains at least a cathode active material. The cathode active material layer may further contain at least one of a conductive material and a binder. The cathode active material is not limited if the material used with the above described hydrogen storing alloy (anode material) functions as a battery. Examples of the cathode active material may include a simple substance of metal, an alloy, and a hydroxide. In particular, the cathode active material preferably contains a Ni element, more preferably a nickel hydroxide. The conductive material and the binder are in the same contents as those described for the anode above.

On the other hand, the air electrode reaction layer preferably contains at least a catalyst that promotes an air electrode reaction, and may further contain at least one of a conductive material and a binder. Examples of the catalyst may include noble metals such as Pt, and composite oxides such as Perovskite-type oxides. The conductive material and the binder are in the same contents as those described for the anode above.

Examples of the material for the cathode current collector or the air electrode current collector may include stainless, aluminum, nickel, iron, and titanium. Also, examples of the shape of the cathode current collector or the air electrode current collector may include a foil shape, a mesh shape, and a porous shape.

### 3. Electrolyte layer

The electrolyte layer is a layer that contains an aqueous liquid electrolyte and is formed between the cathode and the anode. The aqueous liquid electrolyte refers to a liquid electrolyte in which water is used as the solvent. The proportion of water with respect to the whole solvent of the liquid electrolyte may be 50 mol% or more, may be 70 mol% or more, may be 90 mol% or more, and may be 100 mol%.

The aqueous liquid electrolyte is preferably an alkali aqueous solution. Examples of the solute of the alkali aqueous solution may include potassium hydroxide (KOH), and sodium hydroxide (NaOH). The solute concentration in the aqueous liquid electrolyte is preferably high; for example, the concentration may be 3 mol/L or more, and may be 5 mol/L or more. The electrolyte layer may have a separator. Inclusion of a separator may effectively prevent short circuits. Examples of the separator may include a porous film that contains a resin such as polyethylene and polypropylene.

### 4. Battery

The battery of the present disclosure contains at least the above described cathode, anode, and electrolyte layer. Also, examples of the battery case for storing the members including the cathode may include a metal case and a resin case. Also, the battery of the present disclosure is usually a secondary battery so as to be repeatedly charged and discharged and useful as a car-mounted battery for example. Incidentally, the secondary battery includes a usage of the secondary battery as a primary battery (use for the purpose of discharge just once after charge). Also, examples of the shape of the battery may include a coin shape, a laminate shape, a cylindrical shape, and a square shape.

In the battery of the present disclosure, the capacity maintenance rate after 100 cycles is, for example, preferably 90% or more. Also, in the battery of the present disclosure, the V elution amount after 100 cycles is preferably 10% or less, and more preferably 5% or less. The conditions for measuring the capacity maintenance rate and the V elution amount such as a charge and discharge condition are the same as those described in Examples later.

Incidentally, the present disclosure is not limited to the embodiments. The embodiments are exemplification, and other variations are intended to be included in the technical scope of the present disclosure if they have substantially the same constitution as the technical idea described in the claim of the present disclosure and offer similar operation and effect thereto.

### Examples

The present disclosure is hereinafter described in more details with reference to Examples.

### [Comparative Example 1]

### (Production of anode material)

A TiCrV alloy was produced by melting pure Ti (purity of 99.9%), pure V (purity of 99.9%), and pure Cr (purity of 99.9%) by arc melting, so as to have the composition ratio of Ti : Cr : V = 20 : 10 : 70 (at%). To remove the gas adsorbed on the surface of the TiCrV alloy, evacuation was conducted at 250°C under decompressed pressure of 1 Pa or less for 2 hours. After that, a hydrogenating treatment was conducted to facilitate crushing of the TiCrV alloy. For the hydrogenating treatment, hydrogenating step of hydrogenating the TiCrV alloy by applying a hydrogen gas pressure of 30 MPa at a normal temperature, followed by a releasing step of releasing the hydrogen by reducing the pressure to 1 Pa or less were conducted, and the hydrogenating step and the releasing step as a set was conducted twice. Thereby, a hydrogen storing alloy in a powder shape was obtained. Incidentally, the composition of the obtained hydrogen storing alloy corresponded to A in the ternary view shown in FIG. 3.

The obtained hydrogen storing alloy was coated with a catalyst (Pd). In particular, the hydrogen storing alloy was entirely coated with Pd by barrel sputtering so that the average thickness of Pd became 10 nm. Thereby, an anode material was obtained.

### (Production of anode)

The anode material, Ni as a conductive material, and two kinds of binder (carboxy methyl cellulose (CMC) and polyvinyl alcohol (PVA)) were mixed so that the weight ratio became the anode material : the conductive material : CMC : PVA = 49 : 49 : 1 : 1, and the mixture was kneaded to produce a paste composition. A porous nickel was coated with the paste composition, then dried at 80°C, and thereafter pressed at 490 MPa by roll pressing to obtain an anode.

### (Production of evaluation cell)

Nickel hydroxide (Ni(OH)₂), cobalt oxide (CoO) as a conductive material, and two kinds of binder (carboxy methyl cellulose (CMC) and polyvinyl alcohol (PVA)) were mixed so that the weight ratio became Ni(OH)₂ : CoO : CMC : PVA = 88 : 10 : 1 : 1, and the mixture was kneaded to produce a paste composition. A porous nickel was coated with the paste composition, then dried at 80°C, and thereafter pressed at 490 MPa by roll pressing to obtain a cathode. The liquid electrolyte used was prepared such that pure water was mixed with KOH so as to have KOH concentration of 6 mol/L. The liquid electrolyte was put into a container, and an evaluation cell with the anode as a working electrode, the cathode as the counter electrode, and a Hg/HgO electrode as a reference electrode was obtained.

### [Examples 1 to 3 and Comparative Example 2]

An evaluation cell was obtained in the same manner as in Comparative Example 1, except that the composition of the TiCrV alloy was respectively replaced with Ti₂₅Cr₂₀V₅₅, Ti₃₀Cr₃₀V₄₀, Ti₃₅Cr₄₀V₂₅, and Ti₄₀Cr₅₀V₁₀. Incidentally, the compositions of the hydrogen storing alloys obtained in Examples 1 to 3 and Comparative Example 2 respectively correspond to B to E in the ternary view shown in FIG. 3.

### [Evaluation]

### (XRD measurement)

An XRD (X-ray diffraction) measurement was conducted for the hydrogen storing alloys in powder shapes produced in Examples 1 to 3 and Comparative Examples 1 and 2. The radiation source used was a CuKα ray. The result is shown in FIG. 4. As shown in FIG. 4, the crystal phase having the BCC structure as almost a single phase was obtained in Examples 1 to 3 and Comparative Example 1. In particular, the peaks were confirmed in the vicinity of 2**θ** = 41.8°, in the vicinity of 2**θ** = 60.7°, and in the vicinity of 2**θ** = 76.3°. In contrast, the peak of the crystal phase having the BCC structure was not confirmed in Comparative Example 2. It was presumed that the BCC structure was not obtained in Comparative Example 2 due to insufficient amount of V elements responsible for the maintenance of the BCC structure.

### (Charge and discharge test)

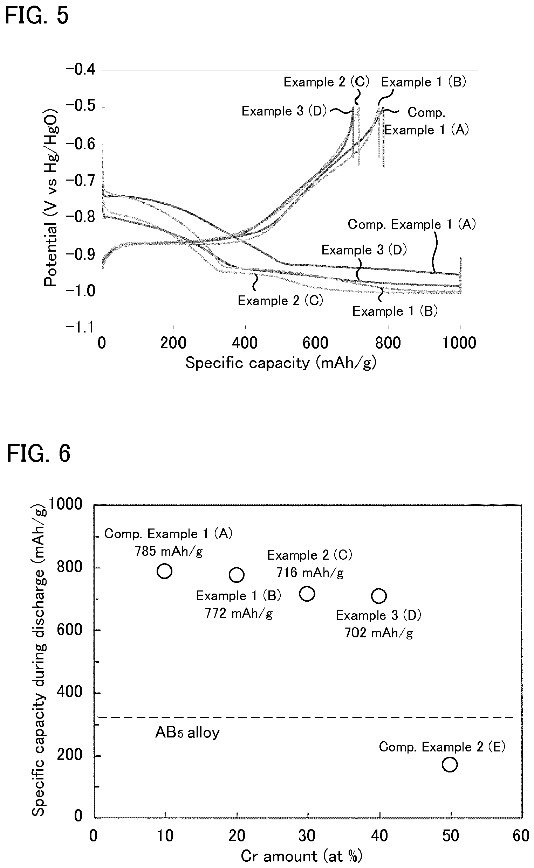

A charge and discharge test was conducted for the evaluation cells produced in Examples 1 to 3 and Comparative Example 1. The charge and discharge test was conducted in the environment at the temperature of 25°Cbyconstant current charge and discharge. The charge was conducted for 10 hours at the current of 100 mA/g, and the discharge was conducted at the current of 50 mA/g until the potential of the working electrode became -0.5 V. The result is shown in FIG. 5. As shown in FIG. 5, the discharge potential and the plateau capacity during discharge in Examples 1 to 3 and Comparative Example 1 were almost the same. In addition, the specific capacity during the discharge is shown in FIG. 6. As shown in FIG. 6, the specific capacity obtained in Examples 1 to 3 and Comparative Example 1 was higher than that of the generally used ABs alloy (LaNis). On the other hand, the specific capacity was lower in Comparative Example 2 than that in Examples 1 to 3 and Comparative Example 1 since the BCC structure was not obtained.

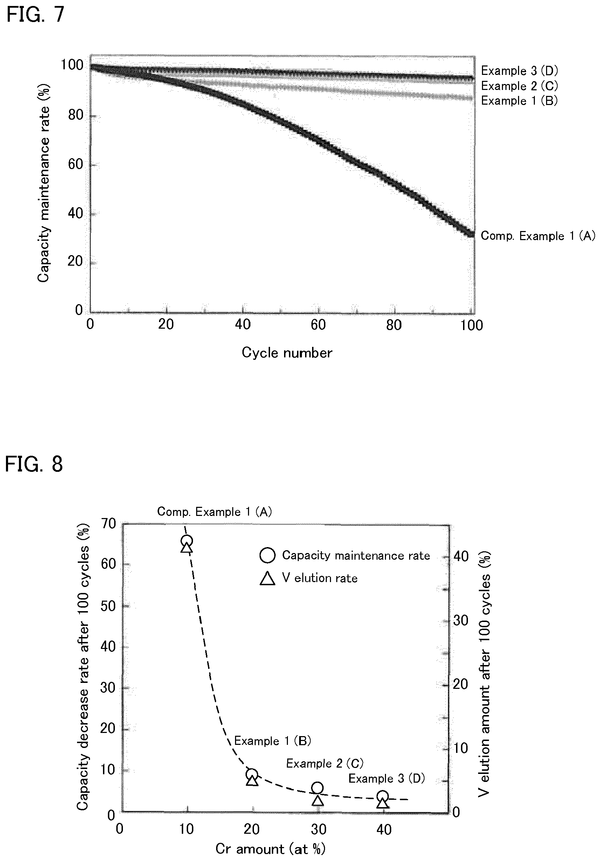

Next, charge and discharge was conducted 100 cycles and the capacity maintenance rate of each cycle was calculated. The capacity maintenance rate was the rate of the discharge capacity in each cycle with respect to the discharge capacity at the first cycle. The result is shown in FIG. 7. As shown in FIG. 7, the capacity maintenance rate after 100 cycles was 85% or more in Example 1, and was 90% or more in Examples 2 and 3. As described above, the capacity maintenance rate obtained in Examples 1 to 3 was higher than that in Comparative Example 1.

Also, a strong correlation was confirmed between the capacity maintenance rate (capacity decrease rate) and the V elution rate. Incidentally, it was defined that the capacity decrease rate = 1 - the capacity maintenance rate. Also, the V elution amount refers to the rate of the V amount eluted to the liquid electrolyte with respect to the V amount (V amount charged) in the electrode before the charge and discharge. The V elution amount may be determined by measuring the V amount eluted to the liquid electrolyte by an ICP analysis.

In particular, as shown in FIG. 8, when plotting the relation between the capacity decrease rate after 100 cycles and the V elution amount after 100 cycles with respect to the Cr amount included in the hydrogen storing alloy, the capacity decrease rate and the V elution amount showed almost the same behavior and thereby the strong correlation was confirmed. Accordingly, it was confirmed that the elution of V elements gave large effect on the capacity maintenance rate (capacity decrease rate). In addition, when the Cr amount was changed from 10 at% (Comparative Example 1) to 20 at% (Example 1), the capacity decrease rate and the V elution amount drastically decreased. In particular, the capacity decrease rate after 100 cycles was 60% or more in Comparative Example 1, but the capacity decrease rate after 100 cycles in Examples 1 to 3 was 10% or less. Likewise, the V elution amount after 100 cycles in Comparative Example 1 was 40% or more, but the V elution amount after 100 cycles in Examples 1 to 3 was 5% or less. As described above, it was confirmed that the capacity maintenance rate was significantly improved by setting the Cr amount to be 20 at% or more.

### [Examples 4 and 5]

An evaluation cell was obtained in the same manner as in Comparative Example 1 except that the composition of the TiCrV alloy was respectively replaced with Ti₂₅Cr₅₀V₂₅ and Ti₄₅Cr₃₀V₂₅. Incidentally, the composition of the hydrogen storing alloy obtained in Examples 4 and 5 respectively corresponded to F and G in the ternary view shown in FIG. 3.

### [Evaluation]

### (XRD measurement)

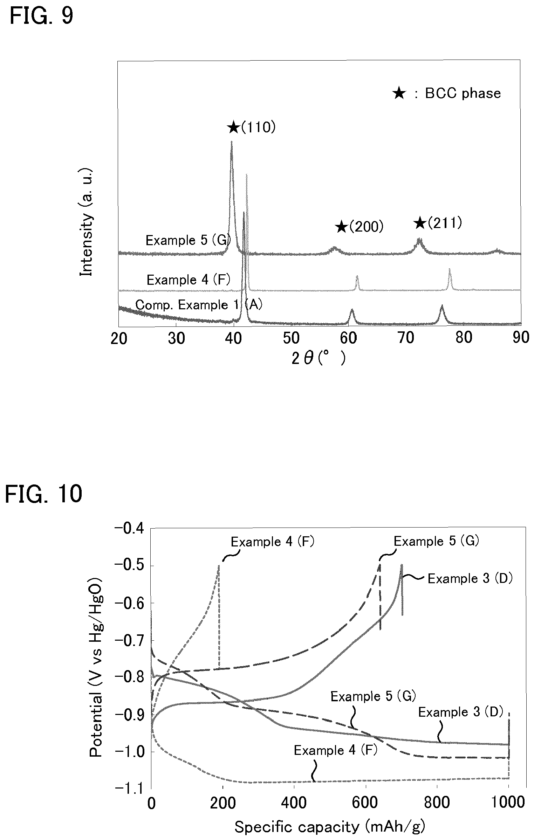

An XRD measurement was conducted for the hydrogen storing alloy in a powder shape produced in Examples 4 and 5. The radiation source used was a CuKα ray. The result is shown in FIG. 9. As shown in FIG. 9, the crystal phase having the BCC structure as almost a single phase was obtained in Examples 4 and 5. Also, the lattice constant of the hydrogen storing alloy (BCC phase) produced in Examples 1 to 5 and Comparative Example 1 was calculated based on the result of the XRD measurement. The result is shown in Table 1. Incidentally, the BCC phase was not obtained in Comparative Example 2, and thus the lattice constant was not calculated.

**[Table 1]**

| | Composition | Lattice constant (Å) |
|---|---|---|
| Comparative Example 1 (A) | Ti₂₀Cr₁₀V₇₀ | 3.0647 |
| Example 1 (B) | Ti₂₅Cr₂₀V₅₅ | 3.0507 |
| Example 2 (C) | Ti₃₀Cr₃₀V₄₀ | 3.0493 |
| Example 3 (D) | Ti₃₅Cr₄₀V₂₅ | 3.0521 |
| Example 4 (F) | Ti₂₅Cr₅₀V₂₅ | 3.0122 |
| Example 5 (G) | Ti₄₅Cr₃₀V₂₅ | 3.1040 |

As shown in Table 1, the lattice constant in all Examples 1 to 3 was in the vicinity of 3.05 Å, which meant that the lattice constant was almost the same. On the other hand, the lattice constant in Example 4 was smaller than that in Examples 1 to 3, and the lattice constant in Example 5 was larger than that in Examples 1 to 3.

### (Charge and discharge test)

A charge and discharge test was conducted for the evaluation cells produced in Examples 3 to 5. The conditions for the charge and discharge test were the same as those described above. The result is shown in FIG. 10. As shown in FIG. 10, charge and discharge were possible in Examples 3 to 5. Incidentally, the specific capacity during discharge in Example 4 was lower than that in Example 3. The reason therefor was presumably due to the small lattice constant in Example 4, which increased the charge potential and proceeded the decomposition of the liquid electrolyte (generation of hydrogen). On the other hand, the specific capacity during discharge in Example 5 and Example 3 was in the same level, except that the discharge potential increased in Example 5 due to the large lattice constant, and thus the battery voltage became lower than that in Example 3.

### Reference Signs List

- 1: hydrogen storing alloy
- 2: catalyst
- 10: anode material
- 11: cathode
- 12: anode
- 13: electrolyte layer
- 20: battery

## Claims

1. An anode material to be used for a battery that contains an aqueous liquid electrolyte, the anode material comprising:
a hydrogen storing alloy that reversibly stores and releases hydrogen; **characterized in that**
the hydrogen storing alloy contains Ti, Cr, and V as main components, and is an alloy that contains a BCC phase as a main phase;
a lattice constant of the BCC phase is 3.01 Å or more and 3.10 Å or less; and
the Cr content in the hydrogen storing alloy is 20 at% or more.

2. The anode material according to claim 1 further comprising a catalyst that coats the hydrogen storing alloy.

3. The anode material according to claim 2, **characterized in that** the catalyst contains a noble metal element.

4. The anode material according to claim 2 or 3, **characterized in that** neither the hydrogen storing alloy nor the catalyst contains Ni.

5. The anode material according to any one of claims 1 to 4, **characterized in that** the Cr content in the hydrogen storing alloy is 50 at% or less.

6. A battery comprising a cathode, an anode, and an electrolyte layer that contains an aqueous liquid electrolyte and is formed between the cathode and the anode; **characterized in that**
the anode is provided with the anode active material layer that contains the anode material according to any one of claims 1 to 5.

7. The battery according to claim 6, **characterized in that** the cathode is an air electrode.
